# EUROPEAN PATENT APPLICATION

(11) **EP 4 831 588 A1**
(43) Date of publication of application: **28.10.2026**
(21) Application number: 25171933.2
(22) Date of filing: 23.04.2025
(51) Int. Cl.: G01C 21/16, G01C 25/00, G01H 17/00

(54) **METHODS AND SYSTEMS FOR DETERMINING WHETHER AN OBJECT IS STATIONARY WITH RESPECT TO AN EARTH-FIXED REFERENCE FRAME**

(71) Applicant: Trimble Inc, Westminster CO 80021 (US)
(72) Inventor: NARASIMHAN, Abishek, Munich (DE); AYRES SAMPAIO, Diogo, Porto (PT)
(74) Representative: Hoffmann Eitle

(57) **Abstract**

Some embodiments pertain to methods for determining whether an object is stationary with respect to an Earth-fixed reference frame. The method comprises: acquiring (s10) inertial data from an IMU rigidly mounted with respect to the object; and, for each of a plurality of time intervals under consideration: (i) generating (s20) windowed inertial data by applying a window function to the inertial data acquired during the time interval under consideration; (ii) estimating (s30) a power spectral density (PSD) of the windowed inertial data; (iii) low-pass filtering (s40) the estimated PSD based on an estimated PSD of preceding time interval(s); (iv) determining (s50) a ratio ("SNR value") of a maximum of the low-pass-filtered, estimated PSD to a value representing an expected noise level of the IMU; and (v) determining (s60) whether the object is stationary based on the SNR value. The disclosure also relates to systems (1200), vehicles, and computer program products.

## Description

### [Field of technology]

The invention relates to, without being limited to, the field of navigation. More specifically, the fields of application of the disclosed methods, systems, and computer programs include, but are not limited to, geospatial navigation, automotive applications (including highly automated driving and autonomous driving), railway applications, machine guidance, civil engineering, construction, agriculture, disaster prevention and relief, and scientific research.

### [Background]

Inertial navigation systems (INS) utilizing inertial measurement units (IMU) alongside distance measuring instruments (DMI) (based for example on tachometer data) are useful to achieve continuous and reliable positioning within global navigation satellite system (GNSS)-challenged and GNSS-denied environments such as downtown urban scenarios, tunnels, and garages. By integrating INS with GNSS, the limitations inherent to each system may be addressed, to ensure seamless and accurate navigation. The synergy between, on the one hand, the IMU's capability to detect acceleration and angular rates and, on the other hand, the DMI measurement based on wheel rotation speeds may effectively compensate for the loss of GNSS signals, thereby enhancing the accuracy of position and attitude estimation. This integration is particularly useful for applications that demand high reliability and continuous navigation under challenging conditions.

The accuracy of inertial navigation is significantly affected by the calibration of sensors, as even minor inaccuracies in calibration of sensor bias can lead to substantial errors in position and attitude estimation. This is because an INS calculates position and velocity by integrating acceleration and angular rate data from the IMU, where any sensor bias or drift directly impacts the trajectory calculation, resulting in cumulative errors over time, a phenomenon known as sensor drift.

There is a constant need for improving navigation techniques, so as to notably increase accuracy, precision, and reliability of the results, while at the same time keeping equipment costs, size, and power consumption as low as possible.

### [Summary]

The present invention aims at addressing, at least in part, the above-mentioned need. The invention includes methods, systems, computer programs, computer program products, and storage mediums as defined in the independent claims. Particular embodiments are defined in the dependent claims.

In one embodiment, a method is provided for determining whether an object is stationary with respect to an Earth-fixed reference frame. The method comprises the following operations: (i) acquiring measurement data, hereinafter referred to as "inertial data", from an IMU rigidly mounted with respect to the object; (ii) for each time interval, hereinafter referred to as "time interval under consideration", of a plurality of time intervals resulting from consecutively using a moving time window, except for an initial time interval, performing the following: (ii.1) generating data, hereinafter referred to as "windowed inertial data", by applying a window function to the inertial data acquired during the time interval under consideration; (ii.2) estimating a power spectral density (PSD) of the windowed inertial data; (ii.3) low-pass filtering the estimated PSD, based on an estimated PSD of at least one time interval preceding the time interval under consideration; (ii.4) determining a ratio, hereinafter referred to as "SNR value", of a maximum of the low-pass-filtered, estimated PSD to a value representing an expected noise level of the IMU; and (ii.5) determining whether the object is stationary with respect to the Earth-fixed reference frame based on the determined SNR value.

The method makes it possible to provide a technique for detecting whether an object is stationary with respect to an Earth-fixed reference frame. Detecting this state is useful for example if the object is, or is in or on, a vehicle, since knowledge of this state can then be accounted for by the vehicle to maintain a reliable and robust navigation solution. More specifically, knowledge that a vehicle is static, i.e. stationary, with respect to an Earth-fixed reference frame may be useful for example to decide when to conduct a sensor calibration procedure intended to be performed in a static state.

In one embodiment, a system is provided for carrying out the above-referred method. In one embodiment, a vehicle, or a container, comprises such a system.

In some embodiments, computer programs, and computer program products and storage media for storing such computer programs, are provided. Such computer programs comprise computer- and/or machine-readable instructions for carrying out, when executed on a processing unit such as one embedded in, or otherwise part of, a system as described above or in another apparatus, or when executed on a set of processing units such as a set of processing units embedded in, or otherwise part of, a set of devices of the system, the above-described operations performed by the system.

### [Brief description of the drawings]

Embodiments of the present invention shall now be described in conjunction with the appended drawings in which:
Fig. 1a is a flowchart of a method in one embodiment of the invention and Fig. 1b is an accompanying explanatory diagram;
Figs. 1c and 1d are flowcharts of methods in two embodiments of the invention, involving the use of data from a plurality of IMU channels;
Fig. 2 is a flowchart of a method in one embodiment of the invention, wherein determining whether the object is stationary based on the SNR value comprises determining that the object is stationary if the SNR value does not exceed a threshold;
Fig. 3a is a flowchart of a method in one embodiment of the invention, further comprising determination of a noise floor level;
Fig. 3b is a flowchart of a method in one embodiment of the invention, comprising the operations described with reference to Fig. 3a and also involving the use of data from two IMU channels;
Fig. 4 shows a simulated, low-frequency (0.1 Hz), low-magnitude (SNR = 3) sine wave signal, to illustrate aspects of some embodiments of the invention;
Fig. 5 shows the number of incorrect static-state detections, as explained in section 2.1 below, to illustrate aspects of some embodiments of the invention;
Fig. 6 shows a simulated ramp signal, to illustrate aspects of some embodiments of the invention;
Fig. 7 shows a number of incorrect static-state detections, as explained in section 2.2 below, to illustrate aspects of some embodiments of the invention;
Fig. 8a schematically illustrates an example of data stored in a ring buffer and Fig. 8b schematically illustrates an example of extracted data of the last 10 elements of a ring buffer for spectral analysis, to illustrate aspects of some embodiments of the invention;
Fig. 9a shows a full Hann window, and Fig. 9b shows a half Hann window, to illustrate aspects of some embodiments of the invention;
Fig. 10a shows a simulated signal in time series, and Fig. 10b shows a PSD of the simulated signal with different windows, as explained in section 4.1 below, to illustrate aspects of some embodiments of the invention;
Fig. 11 shows three graphs to illustrate the speed of detection of the static state, as explained in section 4.1 below, to illustrate aspects of some embodiments of the invention;
Fig. 12 shows three graphs to illustrate the speed of detection of the static state, with a low-pass filtering operation, as explained in section 5 below, to illustrate aspects of some embodiments of the invention;
Fig. 13 shows four graphs to illustrate the detection of the static state, using a half Hann window and a low-pass filtered PSD, as explained in section 6 below, to illustrate aspects of some embodiments of the invention;
Fig. 14 shows four graphs to illustrate the detection of the static state, using a half Hann window and a low-pass filtered PSD, for a simulated ramp signal, as explained in section 6 below, to illustrate aspects of some embodiments of the invention;
Fig. 15 shows the number of incorrect static-state detections as a function of the moving STD threshold for a simulated sine wave, to illustrate aspects of some embodiments of the invention;
Fig. 16 shows the number of incorrect static-state detections as a function of the moving STD threshold for a simulated ramp signal, to illustrate aspects of some embodiments of the invention;
Fig. 17 is a schematic diagram of a system in one embodiment of the invention; and
Fig. 18 is a schematic diagram showing pitch, roll, and yaw axes when considering a land vehicle, to illustrate some aspects of the invention.

### [Detailed description]

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that they are not mutually exclusive.

Throughout the present description (including also the above "Background" section), the abbreviation "GNSS" is sometimes used. The disclosure is, however, not limited to global navigation satellite systems (GNSS) but also applies to regional navigation satellite systems (RNSS). Thus, it is to be understood that each occurrence of "GNSS" in the present document can be replaced with "RNSS" to form, where applicable, additional embodiments. Examples of navigation satellite systems (NSS) include the Global Positioning System (GPS) (United States), the Global'naya Navigatsionnaya Sputnikovaya Sistema (GLONASS) (Russia), Galileo (Europe), the BeiDou Navigation Satellite System (BDS) (China), the Quasi-Zenith Satellite System (QZSS) (Japan), the Indian Regional Navigation Satellite System (IRNSS, also referred to as NavIC) (systems in use or in development). In addition, the term "navigation satellite system" (NSS) is here intended to cover many types of embodiments, and those may also include embodiments involving MEO-PNT and/or LEO-PNT navigation satellite systems. An NSS typically uses a plurality of satellites orbiting the Earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcast signal with a receiver-side version of the code to be detected. Based on the detection of the time of arrival of the code for each of a series of satellites, the NSS receiver estimates its position. Positioning includes, but is not limited to, geolocation, i.e. the positioning on the surface of the Earth. The carrier signals transmitted by the NSS satellites can also be tracked to provide an alternative, or complementary way of determining the range, or change in range between the receiver and satellite. Carrier phase measurements from multiple NSS satellites facilitate estimation of the position of the NSS receiver. That is, for highly precise positioning, carrier phase observations may be used in addition to code measurements.

When the term "real-time" is used in the present document, it means that there is an action (e.g., data is processed, results are computed) as soon as the required information for that action is available. Thus, certain latency exists, which depends on various aspects depending on the involved component(s) of the system.

When the verb "broadcast" (and "broadcasting", etc.) is used, this also covers embodiments where the transmission is a form of multicasting.

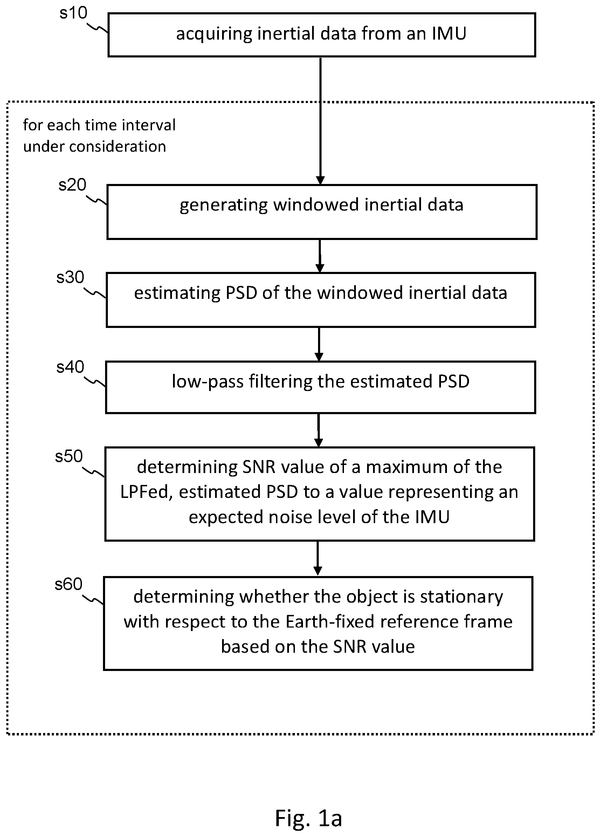

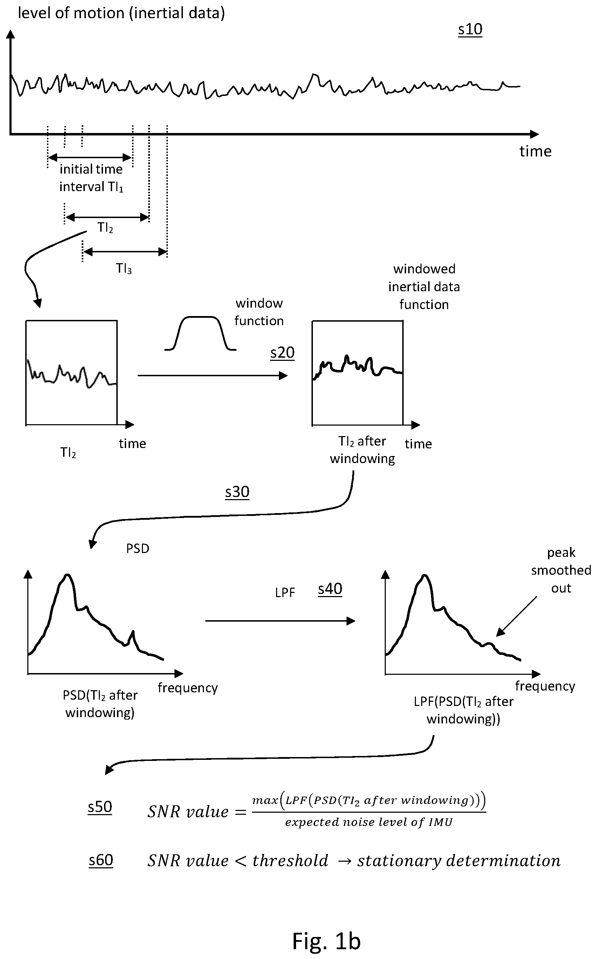

Fig. 1a is a flowchart of a method in one embodiment of the invention, and Fig. 1b is an accompanying explanatory diagram. The purpose of the method is to determine whether an object is stationary with respect to an Earth-fixed reference frame.

The method may be carried out by a system comprising some form of controller(s), control unit(s), processor(s), or processing unit(s) to perform and/or coordinate the operations described below and/or to cause these operations to be performed. The controller(s), control unit(s), processor(s), or processing unit(s) may for example operate as a result of the execution of machine-readable instructions stored in a machine-readable memory. The controller(s), control unit(s), processor(s), or processing unit(s) may for example be implemented in software, hardware, a combination of software and hardware, or pre-programmed application-specific integrated circuit (ASICs).

The above-referred object may be any type of object that may be subject to motion and with respect to which an IMU can be rigidly mounted. In one embodiment, the object is one of: (i) a land vehicle, (ii) an object that can be carried, i.e. transported, by a land vehicle, and (iii) an object that can be pulled by a land vehicle. The land vehicle may for example be at least one of: a motor vehicle, a car, an automobile, a van, a truck, a tanker, a bus, a train, a motorcycle, a tractor, an agricultural equipment, an agricultural tractor, a combine harvester, a crop sprayer, a forestry equipment, a construction equipment, a grader, and an excavator. If the object is an object that can be carried by a land vehicle, the object may for example be a container such as, but without being limited to, a shipping container, an intermodal shipping container, or an intermediate bulk container. If the object is an object that can be pulled by a land vehicle, the object may for example be a trailer or a container carried on, or in, a trailer.

By "Earth-fixed reference frame", it is hereby meant a coordinate system that is fixed relative to the Earth and rotates with it. In one embodiment, the Earth-fixed reference frame is an Earth-centered Earth-fixed (ECEF) reference frame.

By "stationary with respect to an Earth-fixed reference frame", it is hereby meant not moving with respect to an Earth-fixed reference frame, i.e. at rest, immobile, fixed in position with respect to said reference frame. In the present disclosure, the term "static" is used as a synonym of "stationary". Determining whether an object is stationary with respect to an Earth-fixed reference frame therefore generally amounts to determining whether an object is stationary with respect to the Earth.

The method comprises the following operations, which will be described with reference to Figs. 1a and 1b.

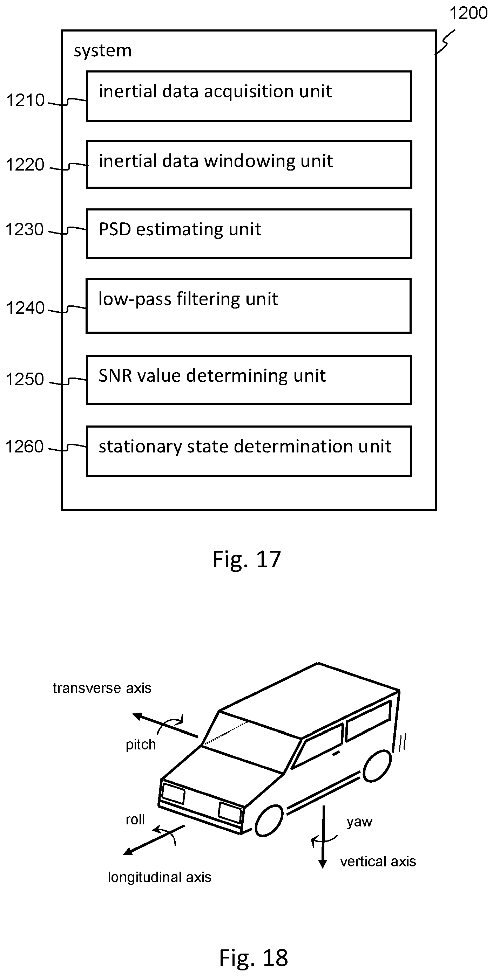

In operation s10, measurement data, hereby referred to as "inertial data", is acquired from an IMU rigidly mounted with respect to the object. The IMU may for example be rigidly mounted with respect to a frame of the object. If the object is a land vehicle, the IMU may be rigidly mounted to the vehicle frame, e.g. the vehicle chassis, to detect and measure its motion. If the object is a land vehicle, the IMU acquires and measures the inertial data in the body frame (i.e., the vehicle frame), and, hereinafter, when the terms "forward accelerometer" or "vertical gyroscope" are mentioned, those refer to inertial data of linear acceleration (i.e., acceleration in one direction) along the longitudinal axis of the vehicle frame and angular rotation along the vertical axis of the vehicle frame, respectively. Regarding the longitudinal, transverse, and vertical axes of a land vehicle, see for example the illustration of Fig. 18. The IMU may be mounted such that the IMU body frame is aligned with respect to the land vehicle's frame. If this is not the case, the inertial data should be transformed, i.e. projected, from IMU body frame to land vehicle's frame.

In one embodiment, the IMU is part of an INS. An INS is a three-dimensional dead-reckoning navigation system comprising at least a navigation processor and an IMU (see, e.g., ref. [1], pp. 7-8, section 1.2 - note: a list of references is provided at the end of the description, together with a list of abbreviations). An IMU comprises at least three mutually orthogonal accelerometers and three gyroscopes.

In one embodiment, inertial data from the IMU is acquired at a rate in the range from 3 to 1000 Hz, for example 5, 10, or 15 Hz. The rate of acquisition may be equal to the sampling rate of the IMU. A low rate of acquisition, such as a rate equal to or smaller than 15 Hz, is advantageous to reduce computation and memory usage.

The acquisition of the inertial data by the system carrying out the method may for example involve any type of wired or wireless data transmission such as, without being limited to, wireless transmissions based on Bluetooth, Wi-Fi, or Li-Fi. In one embodiment, the data is transmitted in real-time, i.e. as soon as available (in line with the above-mentioned definition of the term "real-time"). This applies to all other parts of the present disclosure, too.

The inertial data comprises all, or some, data produced and output by the IMU, i.e. representing measured linear acceleration along the longitudinal, transverse, and vertical axes of the IMU and representing measured rotational rates (measured angular velocity) around the longitudinal, transverse, and vertical axes of the IMU, or any other data acquired from the IMU and representing the object's motion. Regarding the above-referred longitudinal, transverse, and vertical axes, see for example the illustration of Fig. 18 when considering the case of a land vehicle.

This means that, in one embodiment, the acquired inertial data comprises part of all data produced and output by the IMU.

In one embodiment, the object is a land vehicle and the acquired inertial data comprises data representing (i) forward accelerometer data, i.e. either (i.1) forward accelerometer data in the land vehicle's frame, or (i.2) accelerometer data projected from the IMU's body frame to the land vehicle's frame so that the accelerometer data is in the forward direction in the land vehicle's frame, and (ii) data representing rotational rate around a single axis of the vertical gyroscope of the IMU, i.e. either (ii.1) vertical gyroscope data in the land vehicle's frame, or (ii.2) gyroscope data projected so as to be around the vertical direction in the land vehicle's frame. In other words, in this embodiment, the acquired inertial data may comprise two channels out of six channels of the IMU if the IMU's body frame is aligned with the land vehicle's frame, or may comprise more than two IMU channels if projections are performed, as explained above. It is desirable to carry out static-state detection analysis on forward accelerometer data and vertical gyroscope data since, in automotive applications, the land vehicle generally simply moves forward (or backward) or turns. It is also noted that some types of land vehicles, such as excavators with some form of zero-turn capability, may be able to turn without moving forward (or backward).

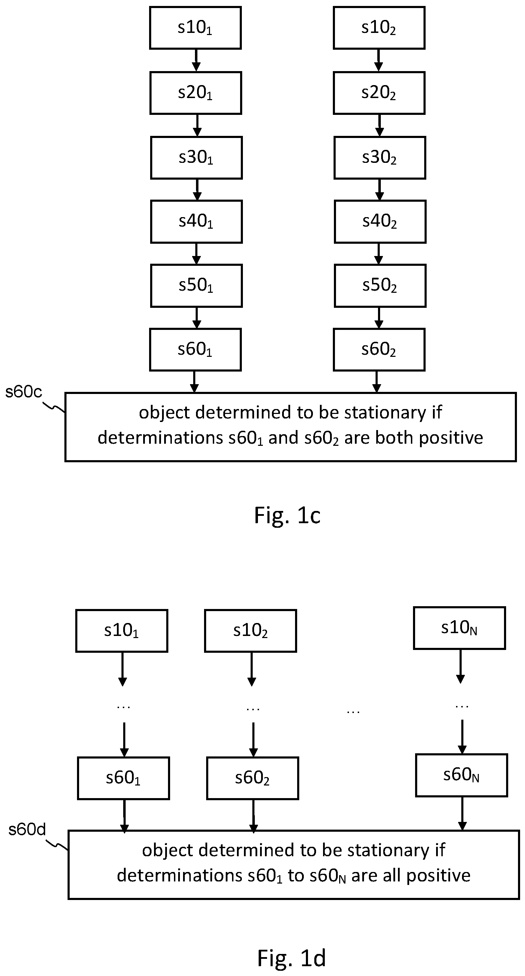

As schematically illustrated by the flowchart of Fig. 1c, if the acquired inertial data comprises two IMU channels (such as e.g. forward accelerometer data and vertical gyroscope data), the data from the two IMU channels may be processed separately (see reference numerals s10₁ to s60₁, on the one hand, and s10₂ to s60₂, on the other hand, in Fig. 1c) and then combined s60c in the sense that, if data from both the first and second IMU channels results in positive static-state detections, the object is determined to be stationary. In contrast, if data from any of the first and second IMU channels does not result in a positive static-state detection, the object is determined not to be stationary.

As schematically illustrated by the flowchart of Fig. 1d, if the acquired inertial data comprises more than two IMU channels, such as N IMU channels (N being an integer greater than 2), the data from the N IMU channels may be processed separately (see reference numerals s10₁ to s60₁, s10₂ to s60₂, ..., s10_{N} to s60_{N} in Fig. 1d) and then combined s60d in the sense that, if data from all N IMU channels results in positive static-state detections, the object is determined to be stationary. In contrast, if data from any of the N IMU channels does not result in a positive static-state detection, the object is determined not to be stationary.

In another embodiment (not illustrated in the drawings), data from multiple IMU channels (s10₁ to s10_{N}), such as more than two IMU channels (for example when the object is a container such as a shipping container, which is not constrained in its motions in contrast to most land vehicles, as explained above), is combined mathematically and the static-state detection operations are performed on the resulting combination of IMU channel data. This means in effect that the inertial data acquired in operation s10 comprises combined measurement data from the IMU, and that operations s20 to s60 (or s20 to s60a) are then performed based on the combined data. This is valid as long as the combination of data allows for Gaussian noise assumptions and the resulting combination of data depicts dynamics for static-state detection analysis. Combinations in which the resulting signal amounts to a mathematical addition of signals, a subtraction of signals, and a multiplication of a signal with a scalar do not change the Gaussian noise assumptions of the resulting signal. Mathematical operations such as integral of signal with respect to time and derivatives of the signal with respect to time also allow for Gaussian noise assumptions to be made in the resulting signal. Multiple combinations of these mathematical operations can be performed as long as the mathematical operations support the mathematical property of superposition so that the resulting signal retains Gaussian distribution properties. Such combinations are advantageous to reduce the computation resources required since for example the PSD can then be estimated s30 only once per time interval under consideration.

In one embodiment, the object is a container such as, but without being limited to, a shipping container, an intermodal shipping container, or an intermediate bulk container, and the acquired inertial data comprises data corresponding to more than two IMU channels (i.e., accelerometer and gyroscope axes). A container has indeed generally fewer motion constraints than land vehicles that are constrained to moving forward and turning.

Regarding operation s10, see also section 3 (titled "Gathering data") below.

Operations s20, s30, s40, s50, and s60 are performed for each time interval, hereby referred to as "time interval under consideration", of a plurality of time intervals resulting from consecutively using a moving time window (which may also be called "sliding window"), except for an initial time interval. This means that two consecutive time intervals under consideration may overlap. In Fig. 1b, the initial time interval is labelled TI₁ and two subsequent time intervals TI₂ and TI₃ are also shown for the sake of illustration. Time intervals TI₁, TI₂, and TI₃ are overlapping. The number of time intervals is not limited to three. There may be any number of time intervals.

In one embodiment, each of the plurality of time intervals is n seconds long, with *n* being a number in the range from 1 to 10 seconds, for example 3, 4, or 5 seconds. The length of the time interval refers to the duration of the moving time window over which the corresponding, implementing window function is non-zero. Long moving time windows, i.e. long time intervals, help approximate the signals better in frequency series, but they also mean that it takes longer to measure any transitional changes.

In operation s20, data, hereby referred to as "windowed inertial data", is generated by applying a window function to the inertial data acquired (in operation s10) during the time interval under consideration. The window function, which may be or may correspond to a mathematical function, is applied in the time domain to a signal segment under consideration to isolate a sub-segment from the longer segment. The window function is used to implement the above-referred moving time window. The windowing process comprises multiplying the original, acquired inertial data with the window function. Some window functions may reduce artefacts such as spectral leakage by smoothing, i.e. tapering, the signal edges at the boundaries of the segments. In one embodiment, the window function is a non-rectangular window function. More specifically, in one embodiment, the window function is any one of: a full Hann window and a half Hann window. Asymmetric window functions, such as (but not limited to) a half Hann window, help for quicker detections of state transitions, whereas symmetric window functions, such as (but not limited to) a full Hann window, have lower side lobes and spectral leakage. Other types of window functions, such as a Hamming window, may alternatively be used.

In one embodiment, the window inertial data has a sampling rate SR, wherein *SR* is a value selected from a range from 3 to 25 Hz, for example 5, 10, or 15 Hz. Preferably SR is a value selected from a range from 4 to 15 Hz, more preferably a value selected from a range from 4 to 8 Hz.

Regarding operation s20, see also section 4 (titled "Selection of window function") below.

In operation s30, a PSD of the windowed inertial data, i.e. the inertial data windowed as a result of operation s20, is estimated. This is a frequency domain analysis, e.g. using a Fast Fourier transform (FFT) or any other technique to decompose a signal into different frequencies. The frequency domain analysis may be limited to half the sampling rate, which determines the frequency range analysed. Higher frequencies get folded into this range. To minimize computational effort, the data may be sampled at, for example, 5 Hz, focusing on folded signals up to 2.5 Hz (Nyquist frequency). Since low-frequency data is useful for determining motion, low-frequency data is prioritized over higher frequency noise. Additionally, in one embodiment, a low-pass filter (which is different from the low-pass filtering of below-described operation s40) is run on the data in the time domain at the native IMU sampling rate to restrict signal to a bandwidth before downsampling to 5 Hz. This may also help reduce impact of high-frequency noise when it gets folded to low-frequency signal.

In operation s40, the estimated PSD (i.e., the PSD estimated in operation s30) is low-pass filtered based on, i.e. using, an estimated PSD of at least one time interval preceding the time interval under consideration, to smooth out sudden variations of the estimated PSD or to smooth out at least some sudden variations of the estimated PSD. This may allow an adaptive low-pass filtering of the estimated PSD by adjusting the extent to which the estimated PSD(s) of the previous time interval(s) is accounted for in operation s40. The low-pass filtering serves to minimize resource consumption (memory and processing), as it may be implemented as a recursive method, i.e. a method that does not require a long history of data. The estimated PSD is low-pass filtered based on an estimated PSD of at least one time interval preceding the time interval under consideration, in the sense that the estimated PSD of preceding time interval(s) is used to smooth the estimated PSD for the time interval under consideration. This means that the low-pass filtering smooths out large variations in the PSD caused by time correlations in noise when measured in a finite time window, producing a cleaner PSD. This enables distinguishing between true signals and noise without requiring more data in operation s30, which would otherwise increase memory and computational resources. In turn, this aims at getting quick detections while also ensuring higher confidence in the accuracy of the detections. In particular, the low-pass filter (LPF) bandwidth may be decreased progressively when it appears likely that the object is static to improve confidence in the detections.

In low-pass filtering operation s40, more than one previous epoch, i.e. more than one previous time interval, may be taken into account. The LPF implicitly incorporates information from multiple previous epochs to prevent quick transitions in the PSD peaks when measuring a low signal-to-noise ratio (SNR) signal. This approach uses historical data to enhance the current interval's PSD analysis.

Regarding operation s40, see also section 5 (titled "Low-pass filtering with data from previous PSD estimates") below.

In operation s50, a ratio, hereby referred to as "SNR value", of a maximum of the low-pass-filtered, estimated PSD to a value representing an expected noise level of the IMU is determined. The value representing an expected noise level of the IMU may be determined empirically. The value may also be based on or taken from a datasheet of the IMU.

In operation s60, whether the object is, i.e. is estimated to be, stationary with respect to the Earth-fixed reference frame is determined based on, i.e. based at least on, the SNR value (determined in operation s50). The SNR value reflects the prominence of the motion (or absence of motion) the object is subject to. The output of the method may for example comprise information indicating whether the object is, i.e. is estimated to be, stationary with respect to the Earth-fixed reference frame. That information may for example be used by other processing elements, other processing parts of the system, and/or other processing systems, such as to, without being limited to, determine whether or not to initiate a sensor calibration process, or appropriately choose the stationary corrections to be applied in a Kalman filtering process.

The method makes it possible to provide a technique for detecting whether an object is stationary with respect to an Earth-fixed reference frame. Detecting this state is useful for example if the object is stationary, or is in or on a vehicle that is stationary, since knowledge of this state can then be accounted for so that the object or the vehicle can maintain a reliable and robust navigation solution. More specifically, knowledge that a vehicle is static in an Earth-fixed reference frame may for example be used to decide when to conduct a sensor calibration procedure intended to be performed in a static state.

Sensor biases are typically estimated and corrected using, for example, a Kalman filter. The Kalman filter integrates data from various sensors to estimate the object's or land vehicle's state, modeling the system's behavior and adjusting the calibration bias states of the sensors by comparing predicted position and velocity states against actual measurements from GNSS and DMI, thereby continuously refining the estimates to minimize error.

However, low-cost DMI, often used in the automotive industry, present limitations such as deadbands that do not register minor movements, poor incremental position resolution that impacts distance measurement accuracy, and ghost pulses that falsely indicate motion when the vehicle is stationary. Ghost pulses may be caused by quantization issues when a line is not properly grounded.

The process of predicting IMU sensor biases with a Kalman filter can be slow, with the accuracy of convergence heavily reliant on the precision of applied corrections and the dynamic range covered by these measurements. These corrections are derived from the discrepancies between predicted and observed measurements. Inaccurate corrections can hinder the Kalman filter's ability to estimate sensor biases accurately and quickly, potentially leading to extended convergence times and inaccurate navigation solutions.

Nonetheless, leveraging knowledge of vehicle dynamics, particularly in automobiles, and the ability to reliably detect when the vehicle is stationary, can improve the performance of the Kalman filter. Stationary periods offer a valuable opportunity to monitor sensor outputs under controlled conditions, attributing any detected sensor motion to biases rather than actual vehicle movement. Incorporating this environmental detection into the Kalman filter facilitates more accurate and quicker convergence of the IMU bias states. By effectively utilizing these stationary periods for calibration, the filter can adjust sensor bias estimates more rapidly and confidently, resulting in enhanced overall system accuracy. The method described with reference to Figs. 1a and 1b aims at reliably detecting whether the object is stationary in an Earth-fixed reference frame.

In particular, in the context of the above-described embodiments, the following five states may for example arise in the case the object is, or is in or on, a vehicle:

| | |
|---|---|
| State 1: | The vehicle is slowly moving and accelerating: In that case, the acceleration can generally be mapped to a signal lower than 1 Hz. Other signals measured are usually platform vibrations (from motion, engine, suspension, resonance) which appear at higher frequencies. |
| State 2: | The vehicle is moving with a constant velocity: The signals measured are generally primarily at higher frequencies, usually platform vibrations (from motion, road unevenness, engine, suspension, resonance). |
| State 3: | The vehicle is moving extremely slowly (i.e., with lower magnitudes from vibration due to road unevenness and dynamics compared to above-referred states 1 and 2): There may be a low-frequency acceleration component and there is generally higher frequency vibrations caused by motion, engine, etc. |
| State 4: | The vehicle is static with engine on: High-frequency signals (engine vibration at idle) with a small SNR and sensor noise are generally observed. |
| State 5: | The vehicle is static with engine off: Only sensor noise is generally present. |

Some embodiments therefore aim at distinguishing states 4 and 5, which are stationary states, from the other three states, i.e. states 1, 2, and 3. Estimating s30 the PSD at a high sampling rate (e.g., 1000 Hz) shows most signal effects in their native frequencies but this is computationally expensive. For 4 seconds of data, i.e. for a 4-second moving time window, this results in 4000 data points, and computing the FFT is resource-intensive.

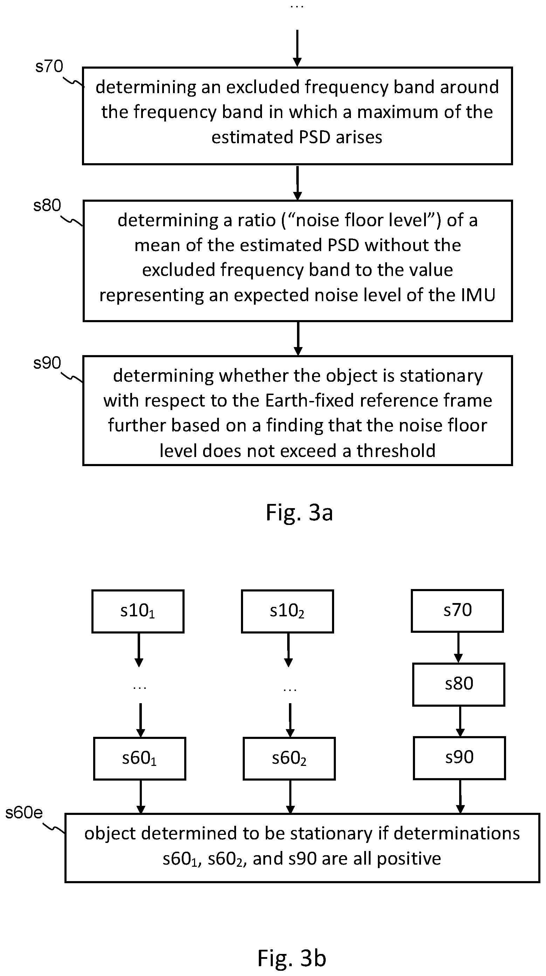

To reduce computational load and still be able to achieve the distinction (between states 4 and 5, on the one hand, and states 1, 2, and 3, on the other hand), data may be sampled, for example, at 5 Hz over a 4-second window, resulting in only 20 data points. At this sampling rate, higher frequencies get folded into lower frequencies (e.g., a 20.5 Hz signal appears as 0.5 Hz). To avoid misinterpretation of signal constituents in this 2.5 Hz window (note: as mentioned above already, 2.5 Hz corresponds to the Nyquist frequency for a 5-Hz signal), the method focuses on the SNR value (see above-referred operation s50), which indicates the prominence of a peak, and, in one embodiment, may also ensure that the signal has a small band (implicitly ensuring that no other significant frequency components exist) by checking the estimated background noise level (as will be described further with reference to Fig. 3a; see especially operations s80 and s90 described below).

Still referring to the embodiment described with reference to Fig. 3a below, when checking the background noise level of a signal that has peaks in multiple frequencies, other peaks (other than the highest peak and band that is removed) would skew this noise level and this change in estimated background noise level could be identified. If engine vibrations are high enough and appear similar to forward motion, they would thereby mask SNR for the static-state analysis. Thus, an additional, optional step may be taken: namely pre-filtering the data with a LPF (e.g., 10 Hz bandwidth) in time series at the native IMU frequency (e.g., 1000 Hz) (this is different from the LPF of operation s40), then sampling this filtered data at 5 Hz. This reduces the number of data points for the FFT computation. By using windowing (see above-described operation s20), PSD (see above-described operation s30), and adaptive filtering (see above-described operation s40), the impact of engine noise can be suppressed in the SNR analysis (see above-described operation s50), allowing true forward motion to be distinguished by its unfiltered magnitude from engine noise within the LPF bandwidth, i.e. the LPF used in operation s40.

In one embodiment (not illustrated in Figs. 1a and 1b), the method further comprises, after determining s60 that the object is stationary with respect to the Earth-fixed reference frame, initiating a sensor calibration process. The determination that the object is stationary may also be used to choose a suitable dynamic model based on a detected environment (the dynamic model may for example be used in a Kalman filter).

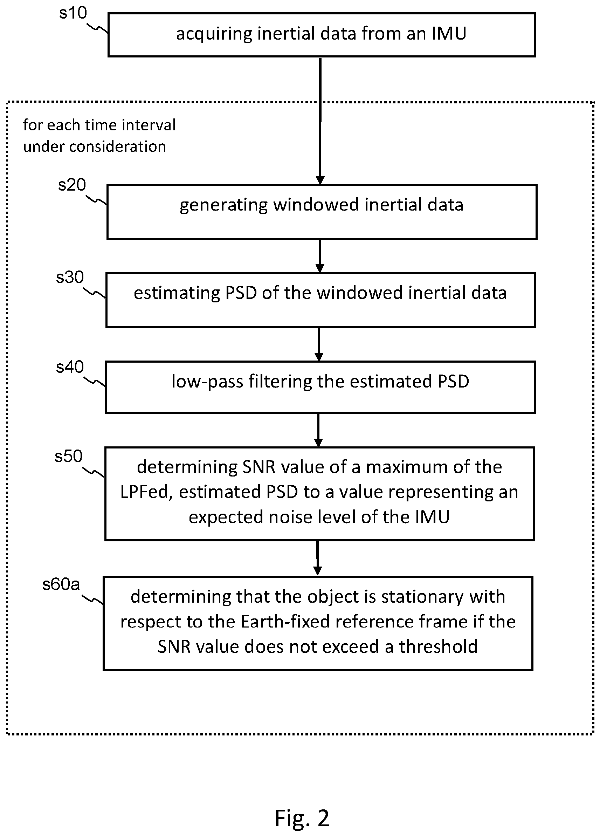

Fig. 2 is a flowchart of a method in one embodiment of the invention, which differs from the method described with reference to Figs. 1a and 1b in that, more specifically, determining s60 whether the object is stationary with respect to the Earth-fixed reference frame based on the SNR value comprises: determining s60a that the object is stationary with respect to the Earth-fixed reference frame if the SNR value does not exceed a threshold. That is, if it is determined that the SNR value does not exceed a threshold, the object is determined s60a to be stationary with respect to the Earth-fixed reference frame. The threshold is used to distinguish between random Gaussian white noise and monochromatic signals. The threshold determines the acceptance criteria for the amount of dynamics that can still be considered as static. If the SNR value exceeds the threshold, the object is not considered to be stationary. In one embodiment, the threshold is a value selected from the range from 2 to 8, such as for example 3.5 for a determination based on vertical gyroscope data and 7 for a determination based on forward accelerometer data.

In one embodiment, a plurality of determinations are performed as illustrated for example in Figs. 1c, 1d, and 3b, and the thresholds used for the determinations under consideration may differ from one another.

Fig. 3a is a flowchart of a method in one embodiment of the invention, wherein additional operations s70 to s90 are performed. The ellipsis, i.e. the series of three dots "...", illustrated in the upper part of Fig. 3a, represents operations s10 to s60 (see Fig. 1a), or s10 to s60a (see Fig. 2). Operations s70 to s90 may be performed in parallel to or after operations s10 to s60, or s10 to s60a. Specifically, the method further comprises, as depicted in Fig. 3a, the following operations.

In operation s70, a frequency band, hereby referred to as "excluded frequency band", around the frequency band in which a maximum, i.e. the maximum, of the estimated PSD (estimated in operation s30) arises is determined. In other words, the most prominent peak and its associated band are removed. Specifically, this excluded frequency band around the maximum of the PSD refers to the range of frequencies where the concentration of energy from the maximum is spread, commonly referred to as the main lobe of the PSD. The distribution of this energy in the frequency domain of a time-series signal depends on the choice of window function, typically known as the width of the main lobe. When applied in real-world applications, the signal in time series is discretised.

In operation s80, a ratio, hereby referred to as "noise floor level", of a mean of the estimated PSD after excluding the frequency band (determined in operation s70) to the value representing an expected noise level of the IMU is determined, i.e. estimated. The noise floor level is a background noise floor level.

In operation s90, it is determined whether the object is stationary with respect to the Earth-fixed reference frame further based on a finding that the estimated noise floor level (determined in operation s80) does not exceed a threshold. This reflects the fact that, when stationary, the noise is likely Gaussian white noise, without peaks, i.e. appearing as constant energy across the frequency spectrum. In one embodiment, the threshold is a value selected from the range from 2 to 8, such as for example 2.5.

In one embodiment, the estimated PSD of the at least one time interval preceding the time interval under consideration (as described above with reference to Figs. 1a and 1b) is hereby referred to as "historical estimated PSD". Furthermore, for low-pass filtering s40 the estimated PSD, an extent to which the historical estimated PSD is used depends on a measure of a likelihood of the object being stationary, the measure being hereby referred to as "stationary state likelihood measure". This embodiment reflects the adaptive nature of the low-pass filtering of the estimated PSD. In one embodiment, for low-pass filtering s40 the estimated PSD, the higher the stationary state likelihood measure, the greater a weight given to the historical estimated PSD. In other words, if the stationary state likelihood measure is high, then the historical estimated PSD has a larger impact on smoothing. Through the weighting, the adaptive smoothing is controlled.

The likelihood of stationary state, i.e. the likelihood of the object being stationary and the stationary state likelihood measure, can for example be estimated as standard deviation (STD) of data in the current buffer (time domain) or as highest estimated SNR of signal in current window buffer (frequency domain) (before LPF operation s40). When the signal likely represents a stationary state when seen with SNR in frequency series or STD in time series, a relationship between the range of the values of SNR or STD can be mapped to range of alpha (LPF coefficient) to control bandwidth of the LPF (of operation s40). Therefore, when the confidence of being in a static state is high, the LPF has a smaller bandwidth to smooth out signal to comply with Gaussian noise assumptions for static-state detection. If it is determined that the vehicle is no longer static, the LPF bandwidth is extended to ensure that the new dynamics is quickly captured for the static-state detection process.

Regarding the embodiment described with reference to Fig. 3a, see also section 6 (titled "Static-state detection logic") below.

As schematically illustrated by the flowchart of Fig. 3b, if the acquired inertial data comprises two IMU channels (such as e.g. forward accelerometer data and vertical gyroscope data), the data from the two IMU channels may be processed separately (see reference numerals s10₁ to s60₁ and s10₂ to s60₂ in Fig. 3b) and then combined s60e with noise floor level determination s90 in the sense that, if operations s60₁, s60₂, and s90 all result in a positive static-state detection, the object is determined to be stationary. In contrast, if any of operations s60₁, s60₂, and s90 does not result in a positive static-state detection, the object is determined not to be stationary.

Similarly (not illustrated), if the acquired inertial data comprises N IMU channels, the data from the N IMU channels may be processed separately and then combined with noise floor level determination s90 in the sense that, if operations s60₁, s60₂, ..., s60_{N} and s90 all result in a positive static-state detection, the object is determined to be stationary. In contrast, if any of operations s60₁, s60₂, ..., s60_{N} and s90 does not result in a positive static-state detection, the object is determined not to be stationary.

In one embodiment, the acquired inertial data is stored in a ring buffer data structure, which may also be called "rolling data buffer", "circular buffer", or "cyclic buffer". Using a ring buffer data structure is advantageous for efficient data storage management.

As explained above, determining that an object, such as a land vehicle, is stationary with respect to an Earth-fixed reference frame is useful to decide, for example, when to conduct a sensor calibration procedure intended to be performed in a static state.

Let us now further discuss the context in which some embodiments of the invention have been developed as well as further embodiments of the invention.

### 1. Introduction

Some embodiments of the invention relate to methods for detecting stationary conditions in automotive scenarios using frequency domain techniques on IMU data. These techniques aim at accurately identifying when a vehicle is stationary and detect the presence of monochromatic noise, such as when the engine is running. The method may recognize stationary states despite engine vibrations by setting a threshold to SNR and background noise floor level. With this detection technique, the method ensures that stationary periods used for calibration are identified with greater reliability, enhancing overall system positioning accuracy.

### 2. Considerations regarding the context in which some embodiments have been developed

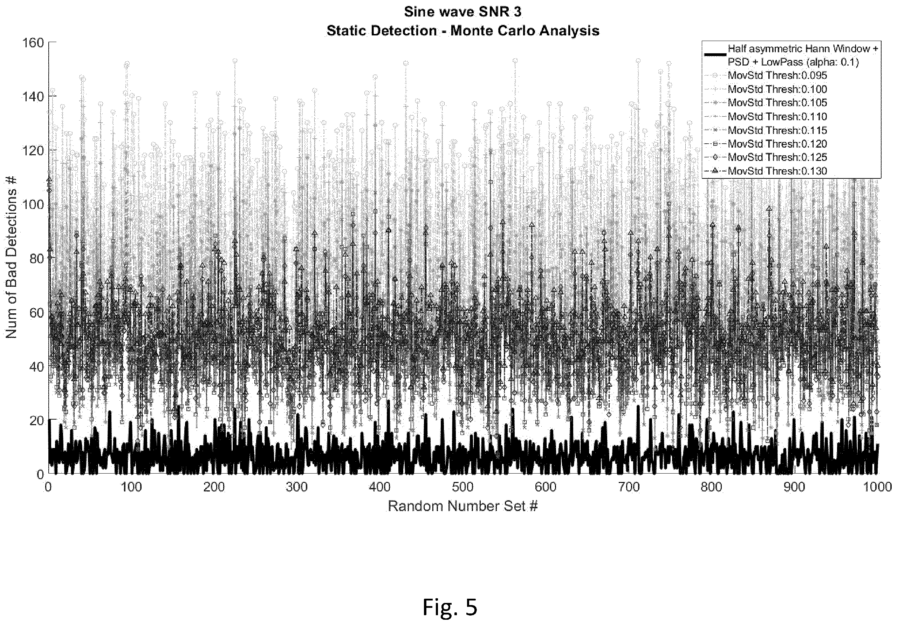

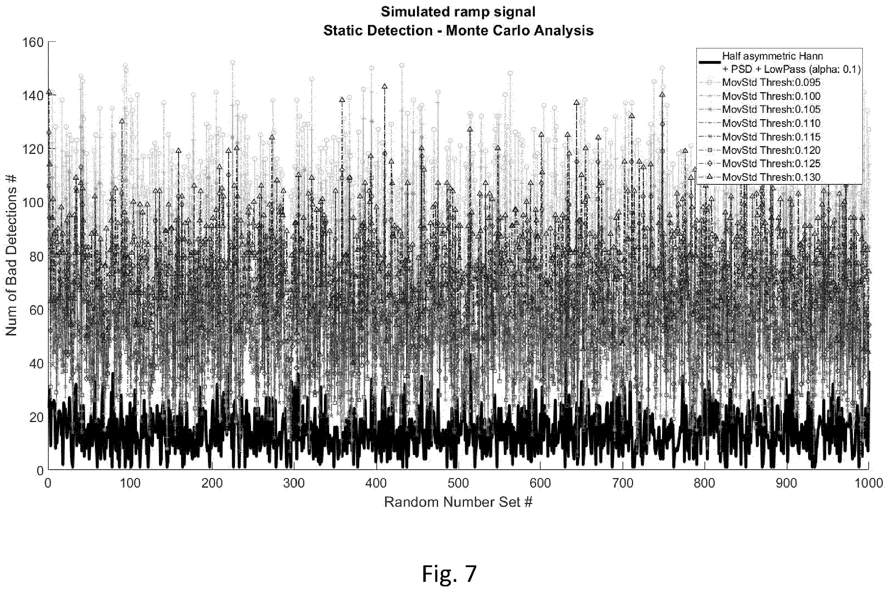

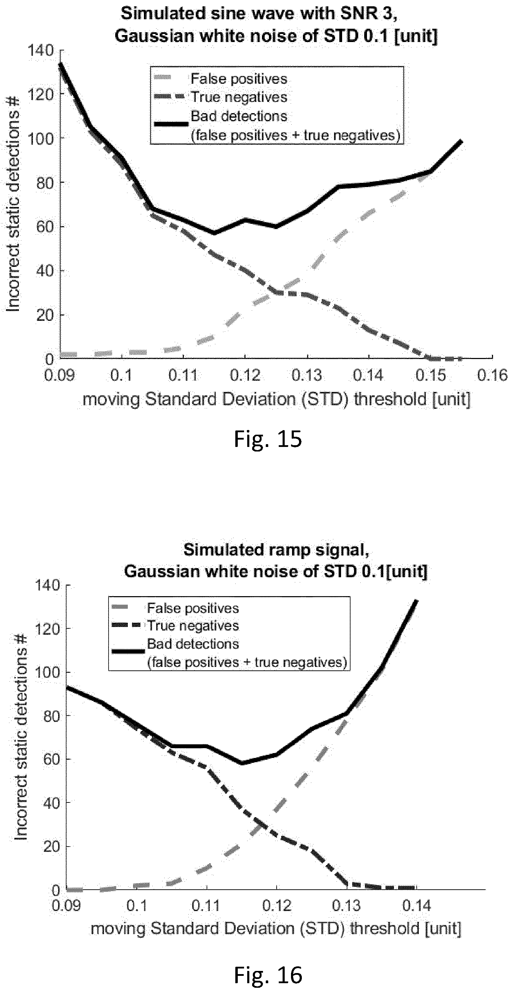

Some non-claimed reference methods may rely on DMI data to determine vehicle static conditions, i.e. a vehicle static state. However, when the DMI enters a deadband, has ghost pulses, or has poor incremental distance resolution, its measurements may become unreliable for this purpose. The forward accelerometer and vertical gyroscope can serve as alternative indicators of motion, but they also capture colored platform noise (single frequency noise from the engine) which might not be distinguishable from small movements when seen collectively in time domain. Non-claimed reference methods may use the STD threshold of accelerometer measurements within a buffer, along with a gyroscope norm and STD and compare it against a threshold, to declare static conditions, i.e. to declare a static state. However, setting a time-series threshold based on changes in moving STD relative to the noise level specified in the datasheet is not consistently reliable. This unreliability arises because the STD is influenced by how well a sine wave fits within the current window. In small finite-time moving windows, the STD change from non-correlated noise does not follow a Gaussian distribution, making Gaussian noise assumptions invalid for calculating noise floor thresholds in time series. In Figs. 5 and 7, while tracking a low SNR sine wave and a ramp signal with movSTD, it is seen that the number of false positives increases with small increases in moving STD thresholds (see also Figs. 15 and 16 in this regard). This is because the dynamics are then recognised as static, and small reductions in the movSTD conditions increase the number of true negatives because more static epochs are now missed in the static-state detections. Therefore, the optimal value of bad detections possible with movSTD threshold is limited due to poor Gaussian noise assumptions.

Thereby, using PSD to calculate SNR and noise floor levels provides the advantage of detecting the nature of data in the frequency domain, i.e. whether the signal is monochromatic or has multiple peaks. A single peak from an engine vibration, on the one hand, and the magnitude of Gaussian white noise representing a stationary state, on the other hand, can be estimated individually and compared against a threshold that is set by the user for stationary detection. Additionally, the method offers the ability to incorporate additional information into the detections without altering the signal constituents through the introduction of a LPF on individual frequency bins per time interval (note: the term "frequency bin" refers here to a discrete frequency band that may be used when performing a discrete FFT, for example). This therefore gives the ability to make stronger Gaussian noise assumptions by calculating noise floor levels. A PSD-based method can introduce spectral leaks when information is converted from time-series domain to frequency-series domain. In addition, a LPF can introduce delays in detection time and to counteract this, use of window functions can be made along with adaptation of bandwidth of the LPF. Window functions such as the half Hann window may enhance detection speed by applying weights to the time-series data buffer by weighting the most recent epoch(s) higher than the older one(s). The LPF characteristics can also be adaptively modified to balance detection speed to better Gaussian noise assumptions. The aim is to differentiate between slow motion or small platform vibrations effectively. Applying a LPF on the PSD and utilizing, for example, a half Hann window leads to increased accuracy in detecting a stationary state in automotive navigation applications.

### 2.1 Tracking a sine wave having a low-magnitude SNR

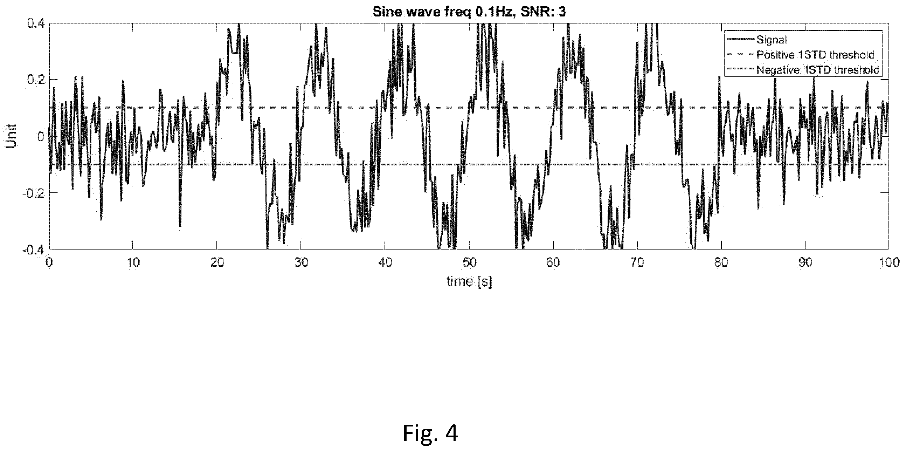

Fig. 4 shows a simulated, low-frequency (0.1 Hz) sine wave signal having a low-magnitude SNR equals to 3, combined with random Gaussian white noise. Detections are performed using a moving 4-second window with 5-Hz sampling rate. As further explained below, the performance of methods in embodiments of the invention may surpass methods based on moving STD thresholds used to detect changes in Gaussian signal characteristics over 1000 sets of random numbers used to simulate Gaussian noise for a 100-second duration. In other words, the performance of methods in embodiments of the invention may exceed that of moving STD thresholds employed to detect changes in signal characteristics.

The number of incorrect static-state detections is equal to the sum of true negative and false positive detections (excluding the 4-second delay in detections due to window length). This is illustrated by Fig. 5, which shows the number of bad, i.e. incorrect, static-state detections (true negatives and false positives) when using an asymmetric windowed SNR and low-pass filtered PSD based method (see plain black curve labelled "Half asymmetric Hann Window + PSD + LowPass (alpha: 0.1)") compared to using different moving standard deviation (movSTD) thresholds (i.e. eight different thresholds: 0.095, 0.100, 0.105, 0.110, 0.115, 0.120, 0.125, and 0.130), to identify a simulated sine wave as illustrated in Fig. 4 over Gaussian white noise over a finite time interval buffer of 4 seconds. In this regard, see also Fig. 15.

### 2.2. Tracking a ramp signal

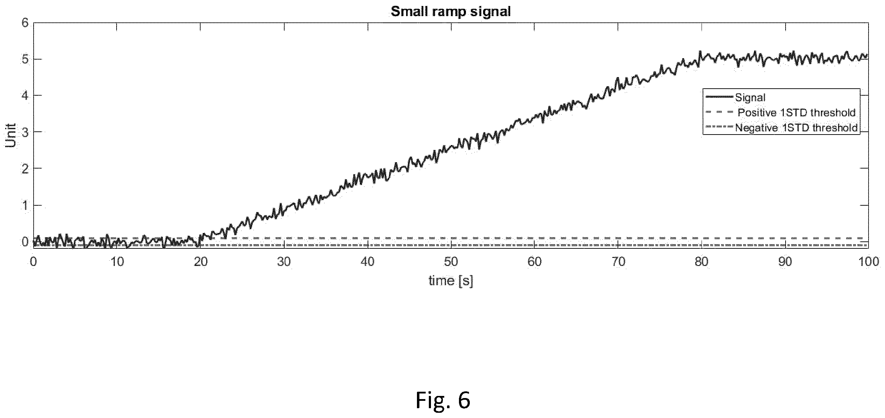

Fig. 6 shows a simulated ramp signal combined with random Gaussian white noise, to illustrate aspects of a static-state detection. Specifically, the simulated ramp part of the signal is added between time 20 [s] and time 80 [s]. This period should not be detected as static. During the period after time 80 [s], there is an offset but no dynamics. This period is analogous to a static state despite the offset. This is also a reason why it is advantageous to remove the mean while doing PSD. Offsets in sensor values occur often but without indicating dynamics. Detections are performed using a moving 4-second window at a 5-Hz sampling rate. The performance of methods in embodiments of the invention exceeds that of moving STD thresholds employed to detect changes in signal characteristics, as illustrated by Fig. 7, which shows the number of bad, i.e. incorrect, static-state detections (true negatives and false positives) in an asymmetric windowed SNR and low-pass filtered PSD based method (see plain black curve labelled "Half asymmetric Hann + PSD + LowPass (alpha: 0.1)") compared to different moving STD (movSTD) thresholds (i.e. eight different thresholds: 0.095, 0.100, 0.105, 0.110, 0.115, 0.120, 0.125, and 0.130), to identify a ramp signal from Fig. 6 over Gaussian white noise over a finite time interval buffer of 4 seconds. In this regard, see also Fig. 16.

### 3. Gathering data

A ring buffer data structure, as used in some embodiments of the invention (although the invention is not limited thereto), is effective due to its efficient handling of continuous data streams. Its fixed-size, cyclic nature allows for seamless overwriting of old data with new inputs, ensuring that the most recent data is available for analysis without the need for complex memory management. This feature is particularly useful to maintain a constant flow of data.

Advantages of using a ring buffer include:
1. Prioritization of current data: The ability to read from the latest to the oldest data ensures that analyses can prioritize the most current information. This ensures that the signal detection speed can be improved with an appropriate window function.
2. Adjustable buffer size: The ring buffer size can be adjusted to balance memory requirements and the resolution of frequency bins for reliable detection.
3. Flexible time window for FFT: The time window required to estimate the FFT can be modified by changing the number of elements read from the buffer.
4. Data decimation: Data can be decimated while being inserted into the buffer, allowing the resolution of the PSD to be adjusted. This helps balance computational complexity by controlling the time-series data inserted into the buffer and the reliability of detections.

In one embodiment, for static-state detection, data from forward accelerometer and vertical gyroscope is used for spectral analysis.

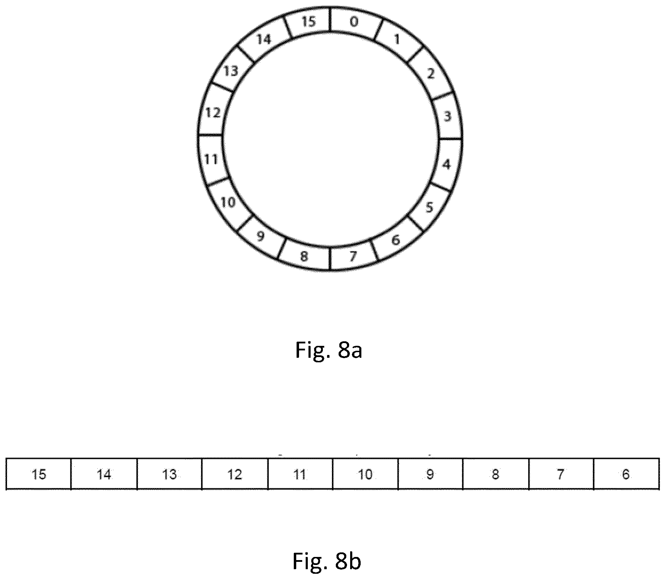

Fig. 8a shows an example of data stored in a ring buffer of 16 elements, for storing pre-decimated data for spectral analysis. Fig. 8b schematically illustrates an example of extracted data of the last 10 elements of the ring buffer for spectral analysis.

### 4. Selection of window function

In signal processing, the estimation of PSD is useful for analyzing the frequency content of signals. However, one of the challenges in PSD estimation using the FFT is spectral leakage, a phenomenon that occurs due to the finite length of the signal segment being analyzed. This leakage manifests as spurious frequencies that distort the true spectral representation of the signal. To address this issue, window functions may be used. Some non-rectangular window functions taper the edges of the signal segment smoothly to zero, thereby reducing the discontinuities at the boundaries. By mitigating these abrupt changes, window functions may effectively minimize spectral leakage, leading to a more accurate representation of the signal's frequency content.

A Hann window for spectral analysis may for example be used for its balanced performance characteristics. The Hann window offers a good compromise between the main lobe width and side lobe attenuation. Its main lobe is relatively narrow, providing high-frequency resolution, which is desirable for distinguishing closely spaced spectral components. Additionally, the Hann window exhibits high side lobe attenuation, which generally reduces the impact of spectral leakage from distant frequencies.

In real-time signal analysis, employing a half Hann window, which is, as mentioned above, asymmetric, may also be useful, especially when it is desirable to emphasize the most recent data points. A half Hann window places more weight on the current and latest epochs, which is beneficial for dynamic systems where the most recent signal information is more relevant. This approach helps reduce phase errors typically introduced by a full Hann window, as it minimizes detection delays by focusing on the latest data with minimal distortion. "Phase errors" here means the time delay in accurately representing the transient nature of the signal.

However, using a half Hann window comes with a trade-off: reduced side lobe attenuation. While immediate signal recognition accuracy is improved, there is also a higher likelihood of spectral leakage from distant frequencies.

The Hann window may be written as follows (see ref. [2]): ${w}_{sym} \left[n\right] = 0.5 ∗ \left(1-cos\left(\frac{2 πn}{N}\right)\right) , 0 \leq n \leq N$

The half Hann window is modified to be: ${w}_{asym} \left[n\right] = 0.5 ∗ \left(1+cos\left(\frac{πn}{N}\right)\right) , 0 \leq n \leq N$ where
- n: current index of window function;
- *N*: length of buffer for PSD computation;
- *w_{sym}*[*n*]: symmetric Hann window function with weight w at index *n*; and
- *w_{asym}*[*n*]: asymmetric Hann window function with weight w at index *n.*

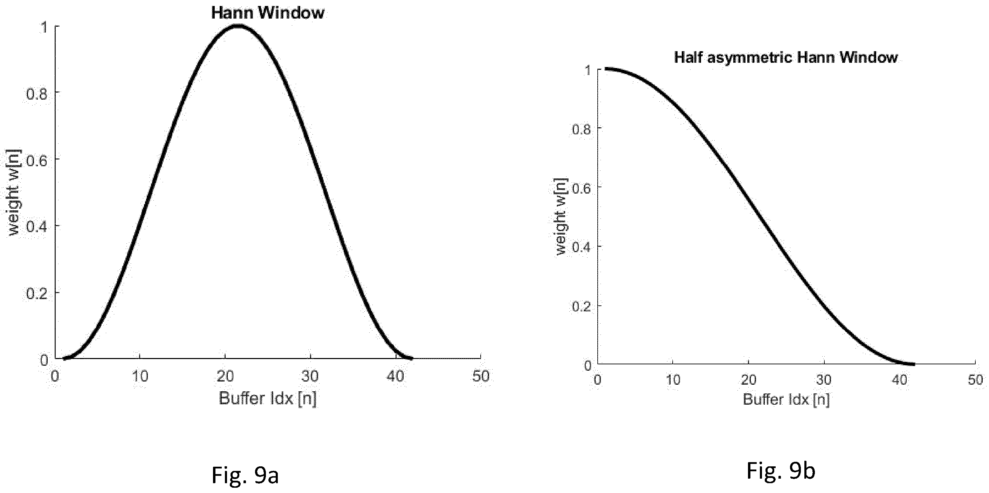

Figs. 9a and 9b respectively show a full Hann window and a half Hann window.

The window function and the signal may for example be multiplied as follows: ${signal}_{meanCorr} = signal - mean \left(signal\right)$ ${signal}_{window , meanCorr} \left[n\right] = {signal}_{meanCorr} \left[n\right] ∗ w \left[n\right] , ∀ \left\{n∈\left[0, N\right]\right\}$ where
- *signal*: signal read from ring buffer, from latest to oldest;
- *signal_{meanCorr}*: mean-corrected signal for processing PSD;
- *n*: index of signal in buffer (so that the current index of signal gets multiplied with the current index of the window function);
- *w*[*n*]: window function; and
- *signal_{window,meanCorr}*: mean-corrected signal with window function applied.

The mean-corrected signal for processing PSD, i.e. *signal_{meanCorr},* aims at removing the bias from the signal. This is desirable to avoid a large peak at frequency 0 and side lobes near it, which would make the frequency analysis of other frequencies difficult.

### 4.1 Performance comparison of different window functions

Performance comparison may be made between a rectangular window, a Hann window, and a half Hann window. A rectangular window is where all data to be converted from time domain to frequency domain is weighted equally and thereby the weighting function is as follows: *w*[*n*] = 1, ∀ { n ε [0 , *N*]}*.*

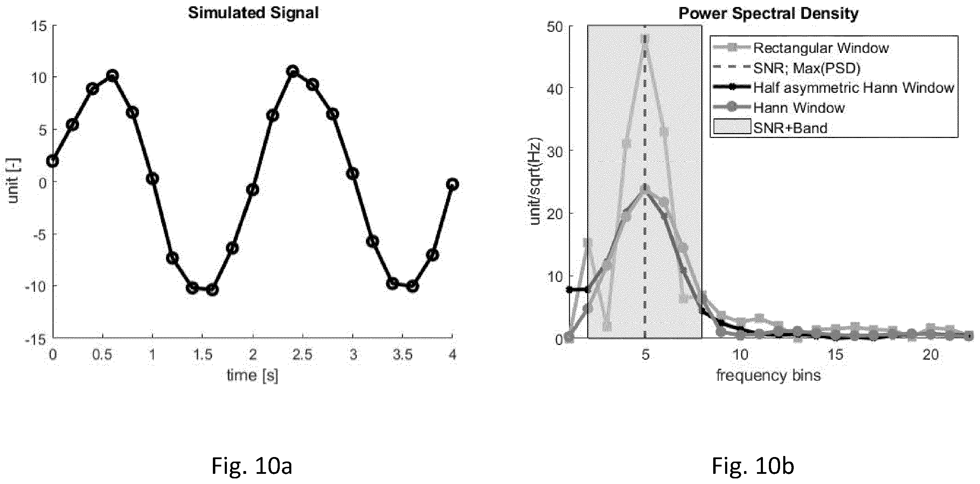

Figs. 10a and 10b show a simulated signal in time series (Fig. 10a), and a PSD of the simulated signal with three different windows, i.e. a rectangular window, a full Hann window, and a half Hann window, with SNR and band marked (Fig. 10b). As explained with reference to Fig. 3a, the band that is shown in Fig. 10b is the band that may be excluded in operation s80.

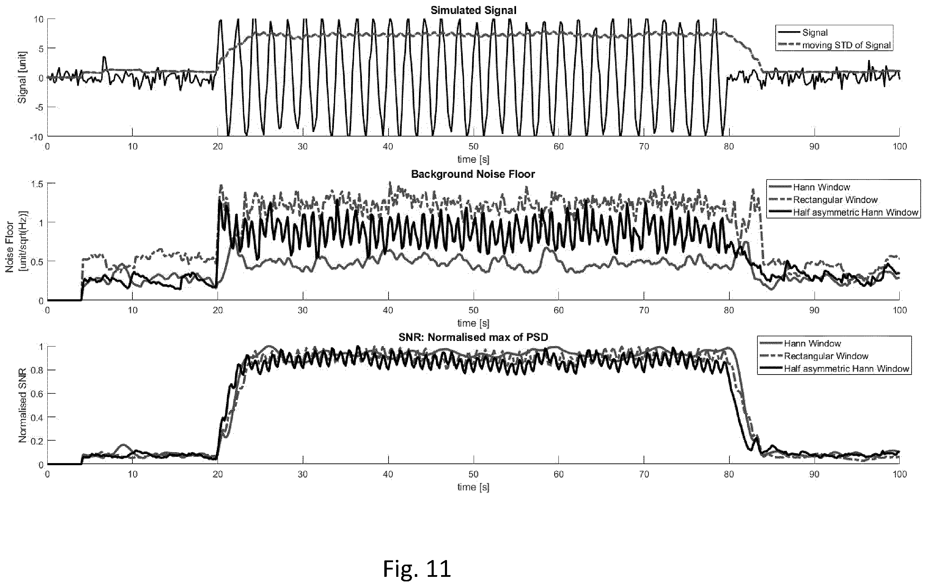

In Figs. 10a, 10b, and 11, the signal is sampled at 5 Hz within a 4-second window. The performance using a half Hann window is comparable to that of a full Hann window, with less attenuation of side lobes, and the weighting function also quickens detection by emphasizing more recent data points. In contrast, using a rectangular window results in a much narrower main lobe but with larger side lobes, leading to increased spectral leakage obscuring the true background noise floor level even in low SNR signal.

Fig. 11 shows (i), in the upper graph, a simulated sine wave signal, added between time 20 [s] and time 80 [s], together with background noise, which is present over the whole time period but particularly visible, individually, before time 20 [s] and after time 80 [s] (plain black curve), as well as the moving STD of the signal (dashed grey curve), (ii) in the middle graph, the background noise floor after applying a rectangular window (dashed grey curve), a full Hann window (plain grey curve), and a half Hann window (plain black curve), and (iii) in the lower graph, the estimated SNR (normalized maximum of the PSD) with a rectangular window (dashed grey curve), a full Hann window (plain grey curve), and a half Hann window (plain black curve). This illustrates the speed of detection by SNR change when using a rectangular window, a full Hann window, and a half Hann window (approximately between time 20 [s] and time 25 [s] and between time 80 [s] and time 85 [s], respectively).

Specifically, in Fig. 11, a sine wave with an amplitude of 10 is added to random noise with an amplitude of 1 at *t*ₛₜₐᵣₜ = 20 [*s*] and removed at *t*_{end} = 80 [*s*]*.* The PSD is calculated in a moving window of 4 seconds with data sampled at 5 Hz. The speed of detection and the extent of spectral leakage to the noise floor from three different methods can be analyzed. A large noise floor level indicated in Fig. 11 as "Background Noise Floor" shows that, when the high-amplitude signal is added, the full Hann window is less affected by spectral noise than the rectangular window, and the half Hann window offers a compromise while being quickest in detecting changes in SNR of signal, as indicated as "SNR: Normalised max of PSD".

The detection speed when the high-amplitude signal is added is highest with the half Hann window, followed by the rectangular window, and then the full Hann window seen in quick changes in the graph titled "SNR: Normalised max of PSD". However, after removing the peak of PSD and the two adjacent frequency bins on either side of the peak, the mean and standard deviation of the remaining PSD should reflect the added Gaussian white noise. The full Hann window exhibits the lowest spectral leakage changes in "Background Noise Floor", followed by the half Hann window, and then the rectangular window. Consequently, the half Hann window offers the best balance between detection speed and spectral leakage to side lobes.

### 5. Low-pass filtering with data from previous PSD estimates

Decimating data to 5 Hz and performing an analysis of the PSD over a 4-second window results in only 20 data points, which may lead to inaccuracies in spectral detection. Incorporating information from previous PSD estimates generally helps balance the speed and accuracy of detections. This method improves the noise floor level and suppresses false peaks from non-correlated noise in a small finite time window, enhancing static-state detections and providing more accurate PSD estimates over time. However, tuning (see below selection of *α*) is desirable, as low-pass filtering can introduce delays in detection. Thus, a balance between PSD accuracy, resolution requirements, and detection responsiveness is desirable based on computational resources and memory available.

The LPF of the estimated PSD may be implemented as follows: $\begin{matrix}{Sxx}_{f \left[bins\times 1\right]} \left[n\right] \\ = \left({I}_{\left[bins\times bins\right]}-{α}_{\left[bins\times bins\right]}\right) ∗ {Sxx}_{f \left[bins\times 1\right]} \left[n-1\right] + {α}_{\left[bins\times bins\right]} \\ ∗ {Sxx}_{\left[bins\times 1\right]} \left[n\right]\end{matrix}$ where
- *Sxx*[*n*]: calculated PSD in current epoch;
- *Sxx_{f}*[*n*]: filtered PSD in current epoch;
- *α*: square matrix with LPF weights along diagonal;
- *n*: index of current epoch; and
- *I*: identity matrix.

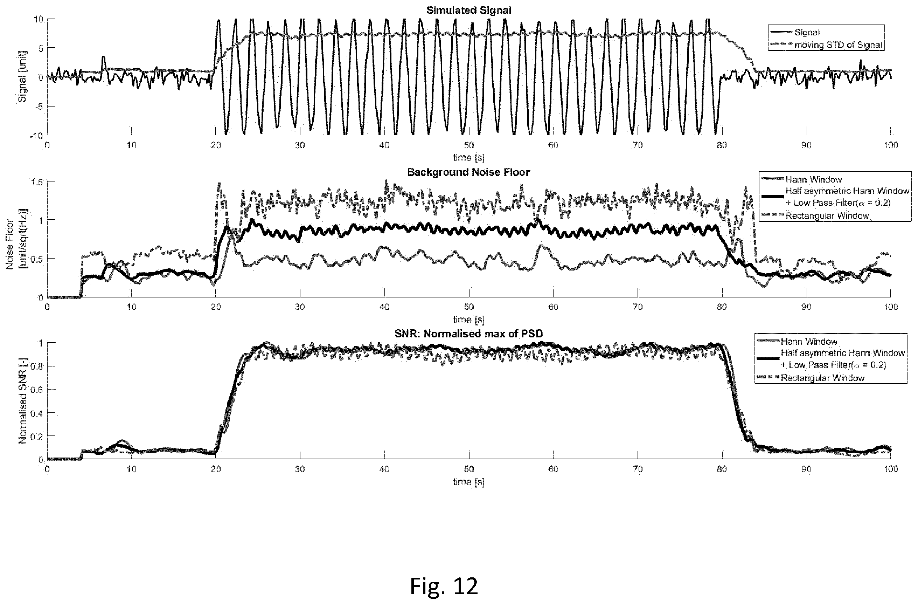

Fig. 12 shows (i), in the upper graph, a simulated sine wave signal, added between time 20 [s] and time 80 [s], together with background noise, which is present over the whole time period but particularly visible, individually, before time 20 [s] and after time 80 [s] (plain black curve), as well as the moving STD of the signal (dashed grey curve), (ii) in the middle graph, the background noise floor after applying a rectangular window (dashed grey curve), a full Hann window (plain grey curve), and a half Hann window with LPF applied to individual frequency bins (plain black curve), and (iii) in the lower graph, the estimated SNR (normalized as discussed above) with a rectangular window (dashed grey curve), a full Hann window (plain grey curve), and a half Hann window with LPF applied to individual frequency bins (plain black curve). This illustrates the speed of detection by SNR change when using a rectangular window, a full Hann window, and a half Hann window with LPF applied to individual frequency bins.

As shown in Fig. 12, the balance between detection speed and reduced spectral leakage can be achieved for example using a half Hann window. The LPF settings help smooth out large variations in frequency bins affected by correlations in the non-time-correlated part of the signal due to the small sample size (i.e., it smooths out false peaks in Gaussian noise when seen in a limited time domain). *α* = 0.2 is used in the simulation illustrated by Fig. 12. Low spectral leakage indicated as "Background Noise Floor" with the LPF corresponds to better Gaussian noise assumptions of the noise floor.

By modifying the value of *α*, it is possible to adaptively adjust the LPF characteristics for individual frequency bins to match half-Hann settings when the vehicle is determined to have a high probability of motion. Thereby, the range of data in the frequency domain that is taken into account in the static-state detection process reflects the motion to which the object is currently subject. More data can be incorporated into the analysis of the PSD to increase static-state detection confidence when the vehicle is likely stationary. This smooths out the PSD thereby giving a more realistic noise profile for static-state detection analysis where the Gaussian noise assumption is stronger. However, this comes with introducing delays to demonstrate the change in motion. The adaptive approach offers better Gaussian noise assumptions when necessary and balances this with the speed of detection.

### 6. Static-state detection logic

The signal analysis is now discussed by studying the SNR and background noise floor level. The SNR may be calculated as follows: $SNR = \frac{max \left(PSD\right)}{specNoise}$

The background noise floor level may be calculated as follows: $Noise Floor Level = \frac{mean \left({PSD}_{SNRBandRemoved}\right)}{specNoise}$ where
- *SNR*: signal-to-noise ratio;
- *PSD_{SNRBandRemoved}*: PSD without SNR frequency bin and without frequency bins adjacent to the SNR frequency bin; and
- *specNoise*: expected noise level in signal as per specification.

Excluding the SNR band and associated bands (see shaded region in Fig. 10b) from noise floor level calculations is desirable as the use of a window introduces a main lobe which should be removed for an accurate noise level computation for comparing with the noise level according to the specification (i.e., datasheet or empirically determined). Thereby, this gives the ability to measure the noise level and potentially identify the existence of low SNR monochromatic signals (signals with single wavelength) (assuming engine vibration as low SNR monochromatic signal).

Now it will be explained how the SNR and background noise floor level can be used to distinguish white noise from other signal components.

An SNR and a background noise threshold is used to detect non-white noise components of the signal.

### Detection 1: Simulated sine wave with SNR = 3, random Gaussian white noise of STD = 0.1 :

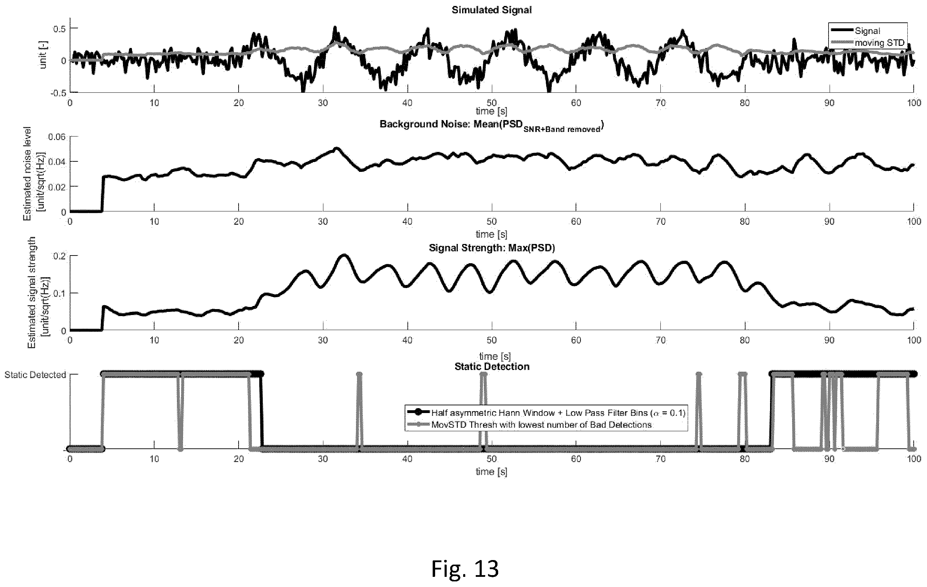

A sine wave with SNR equal to 3 and frequency equal to 0.1 Hz is added at t = 20 [s] and removed at t = 80 [s] in Fig. 13, which shows SNR and background noise analysis of the low-frequency, low-amplitude sine wave signal for static-state detection. Specifically, Fig. 13 shows the simulated sine wave signal from Fig. 4 and its moving STD (upper graph of Fig. 13), the background noise floor (second graph from the top), and the estimated signal strength which is the value of the maximum of the PSD (third graph from the top), for static-state detection (lower graph) using a half Hann window and a low-pass filtered PSD.

### Half Hann window + LPF:

(excluding 4-second transition window, which is a known detection delay due to LPF)

| Number of false positives | Number of true negatives | Number of bad detections (false positives + true negatives) |
|---|---|---|
| 0 | 0 | 0 |

In Fig. 15, which does not imply any windowing, it is seen that, when using movSTD for static-state detection while comparing this against a threshold from range of 0.09 to 0.16 unit to detect white noise from the added signal, a threshold needs to be chosen such that there is a minimum number of true negatives and false positives. A large number of true negatives are seen for smaller movSTD threshold values, because a low movSTD threshold misses more static epochs in the static-state detection process. In turn, a larger movSTD threshold gives more epochs of false positives where the added signal is mistakenly detected as static. This discrepancy arises due to the poor Gaussian noise assumption. By strengthening the Gaussian noise assumptions with PSD and LPF, the number of bad detections, i.e. the number of incorrect detections, is lower compared to movSTD-based method and, in Fig. 5, it is seen that it performs consistently better over 1000 sets of random numbers.

### Detection 2: Simulated slow ramp, random Gaussian white noise of STD = 0.1: A small ramp is added at t = 20 [s] and removed at t = 80 [s].

### Half Hann window and LPF:

(excluding 4-second transition window, which is a known detection delay due to LPF)

| Number of false positives | Number of true negatives | Number of bad detections (false positives + true negatives) |
|---|---|---|
| 5 | 1 | 6 |

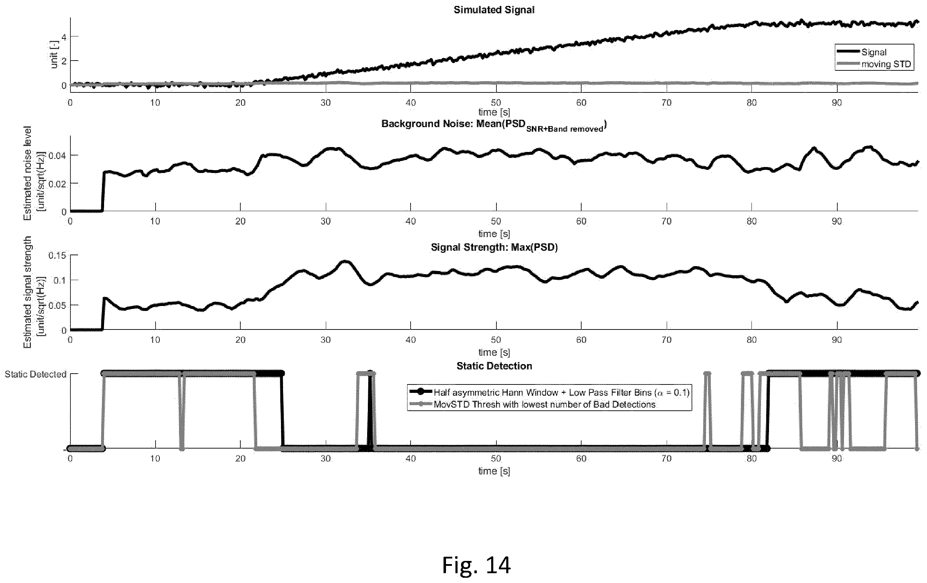

Fig. 14 shows a simulated ramp signal and its moving STD (upper graph), the background noise calculated as Mean(PSD_{SNR+Band removed}) (second graph from the top), and the estimated signal strength which is Max(PSD) (third graph from the top), for static-state detection (lower graph) using a half Hann window and a low pass filtered PSD.

As seen in Fig. 16, small changes in the moving standard deviation (movStd) threshold result in a significant increase in the number of incorrect detections. Specifically, minor increments in the movStd threshold lead to numerous false positives, while minor reductions result in missed detections, causing a high number of true negatives. Using frequency series analysis, the number of incorrect detections is reduced. This is demonstrated in Figs. 5 and 7, where a Monte Carlo simulation was conducted on 1000 sets of random numbers for different movStd thresholds. The results show that the combination of a half Hann window and a LPF consistently performs better across all random number set combinations.

The SNR value for static-state detection can be selected to account for engine vibrations, while the noise floor level can be adjusted to accommodate the magnitude of non-time-correlated components (magnitude of noise) acceptable for static-state detection.

The LPF is adapted and selectively applied to balance static and dynamic movements as large forward accelerations and vertical rotational rates can also be measured using a forward accelerometer in the vehicle frame and a vertical gyroscope in the vehicle frame and, with just using the LPF, the filter could take longer to converge to a stationary representation of motion. It is therefore advantageous to use an adaptive LPF and dynamically adjust the filter setting to allow faster convergence to static conditions, i.e. static state, and to reduce detection time.

The SNR is estimated based on downsampled time-series data, where measured frequencies are folded multiple times from their native frequencies. While improving this comes at a computational cost, relying on the SNR remains a reliable method to distinguish slow motion, perceived as a low-frequency signal. Thus, no distinction is made between folded high-frequency signals and actual low-frequency signals or motion; only the SNR of the signal (until 2.5 Hz) for data sampled at 5 Hz in this example is estimated. In platforms with large platform vibrations, optionally, a LPF might be used to be implemented in time series at native IMU frequency before downsampling the data for spectral analysis. This method is advantageous to be better able to distinguish motion for automotive applications when high frequency noise masks SNR analysis.

### 7. System

Fig. 17 schematically illustrates, in accordance with one embodiment of the invention, a system 1200 comprising a device or a set of devices. System 1200 is for determining whether an object is stationary with respect to an Earth-fixed reference frame. System 1200 comprises an inertial data acquisition unit 1210, an inertial data windowing unit 1220, a PSD estimating unit 1230, a low-pass filtering unit 1240, an SNR value determining unit 1250, and a stationary state determination unit 1260. Inertial data acquisition unit 1210 is configured for performing operation s10 as described above with reference to Fig. 1, inertial data windowing unit 1220 is configured for performing operation s20 as described above with reference to Fig. 1, PSD estimating unit 1230 is configured for performing operation s30 as described above with reference to Fig. 1, low-pass filtering unit 1240 is configured for performing operation s40 as described above with reference to Fig. 1, SNR value determining unit 1250 is configured for performing operation s50 as described above with reference to Fig. 1, and stationary state determination unit 1260 is configured for performing operation s60 as described above with reference to Fig. 1.

In one embodiment, a vehicle comprises a system 1200 as described above. The vehicle may for example be at least one of: a motor vehicle, a car, an automobile, a van, a truck, a tanker, a bus, a train, a motorcycle, a tractor, an agricultural equipment, an agricultural tractor, a combine harvester, a crop sprayer, a forestry equipment, a construction equipment, a grader, an excavator, an autonomous vehicle, a self-driving vehicle, a driverless vehicle, a robotic vehicle, a highly automated vehicle, and a partially automated vehicle.

In one embodiment, the IMU is provided in the vehicle, and system 1200, although capable of receiving data from the IMU, does not comprise the IMU. In other words, the IMU can be external to system 1200.

### 8. Additional remarks

Any of the above-described methods and their embodiments may be implemented, at least partially, by means of a computer program or a set of computer programs. The computer program(s) may be loaded on a system, apparatus and/or device, such as for example a control unit, an aided inertial navigation system (AINS) device, or an NSS receiver (running for example within a vehicle). Therefore, the invention also relates, in some embodiments, to a computer program or set of computer programs, which, when carried out on a system, apparatus and/or device as described above, such as for example a control unit, an AINS device, or an NSS receiver (running for example within a vehicle), carries out any one of the above-described methods and their embodiments.

The invention also relates, in some embodiments, to a computer-readable medium, a machine-readable medium, or a computer-program product including the above-mentioned computer program. The computer-readable medium, machine-readable medium, or computer-program product may for instance be a magnetic tape, an optical memory disk, a magnetic disk, a magneto-optical disk, an SSD, a CD-ROM, a DVD, a CD, a flash memory unit, a hard drive, or other storage device, wherein the computer program is permanently, non-transitorily, or temporarily stored. In some embodiments, a computer-readable medium (or a computer-program product) has computer-executable instructions for carrying out any one of the methods of the invention.

In one embodiment, a computer program as claimed may be delivered to the field as a computer program product, for example through a firmware or software update to be installed on vehicles, devices, and/or receivers already in the field. This applies to each of the above-described methods and apparatuses.

As mentioned above, an NSS receiver comprises one or a plurality of antennas configured to receive NSS signals at the frequencies broadcast by the NSS satellites, and an NSS receiver may further comprise processor units, one or a plurality of accurate clocks (such as crystal oscillators), one or a plurality of central processing units (CPU), one or a plurality of memory units (RAM, ROM, flash memory, or the like), and a display for displaying position information to a user.

Where the terms "inertial data acquisition unit", "inertial data windowing unit", etc. are used herein as units (or sub-units) of an apparatus or system, no restriction is made regarding how distributed the constituent parts of a unit (or sub-unit) may be. That is, the constituent parts of a unit (or sub-unit) may be distributed in different software and/or hardware components or devices for bringing about the intended function. Further, the units may be gathered together for performing their functions by means of a combined, single unit (or sub-unit).

Some of the above-mentioned units and sub-units may be implemented at least in part using hardware, software, a combination of hardware and software, pre-programmed ASICs, etc. A unit may include a CPU, a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

### Abbreviations:

- AINS: aided inertial navigation system
- ASIC: application-specific integrated circuit
- BDS: BeiDou Navigation Satellite System
- CD: compact disc
- CD-ROM: compact disk read-only memory
- CPU: central processing unit
- DMI: distance measuring instrument
- DVD: digital versatile disc
- ECEF: Earth-centered Earth-fixed (reference frame)
- FFT: Fast Fourier transform
- GLONASS: Global'naya Navigatsionnaya Sputnikovaya Sistema
- GNSS: global navigation satellite system
- GPS: Global Positioning System
- I/O: input/output
- IMU: inertial measurement unit
- INS: inertial navigation system
- IRNSS: Indian Regional Navigation Satellite System
- LEO-PNT: Low Earth Orbit-Positioning, Navigation and Timing
- LPF: low-pass filter
- LPFed: low-pass-filtered
- MEO-PNT: Medium Earth Orbit-Positioning, Navigation, and Timing
- movSTD: moving standard deviation
- NavIC: Navigation with Indian Constellation
- NSS: navigation satellite system
- PSD: power spectral density
- QZSS: Quasi-Zenith Satellite System
- RAM: random-access memory
- ref.: reference
- RNSS: regional navigation satellite system
- ROM: read-only memory
- SNR: signal-to-noise ratio
- SSD: solid-state disk
- STD: standard deviation

### References:

[1] Groves, Paul D. (2008), "Principles of GNSS, Inertial, and Multisensor Integrated Navigation Systems", Artech House, ISBN 978-1-58053-255-6.
[2] Braun, S. (2001). Encyclopedia of Vibration. ISBN: 978-0-12-227085-7. Elsevier Ltd.

## Claims

1. Method for determining whether an object is stationary with respect to an Earth-fixed reference frame, the method comprising:
acquiring (s10) measurement data, hereinafter referred to as "inertial data", from an inertial measurement unit, hereinafter abbreviated as "IMU", rigidly mounted with respect to the object;
for each time interval, hereinafter referred to as "time interval under consideration", of a plurality of time intervals resulting from consecutively using a moving time window, except for an initial time interval, performing the following:
generating (s20) data, hereinafter referred to as "windowed inertial data", by applying a window function to the inertial data acquired during the time interval under consideration;
estimating (s30) a power spectral density, hereinafter abbreviated as "PSD", of the windowed inertial data;
low-pass filtering (s40) the estimated PSD, based on an estimated PSD of at least one time interval preceding the time interval under consideration;
determining (s50) a ratio, hereinafter referred to as "SNR value", of a maximum of the low-pass-filtered, estimated PSD to a value representing an expected noise level of the IMU; and
determining (s60) whether the object is stationary with respect to the Earth-fixed reference frame based on the SNR value.

2. Method of claim 1, wherein determining (s60) whether the object is stationary with respect to the Earth-fixed reference frame based on the SNR value comprises: determining (s60a) that the object is stationary with respect to the Earth-fixed reference frame if the SNR value does not exceed a threshold.

3. Method of claim 1 or 2, wherein each of the plurality of time intervals is *n* seconds long, with *n* being a number in the range from 1 to 10 seconds.

4. Method according to any one of the preceding claims, further comprising:
determining (s70) a frequency band, hereinafter referred to as "excluded frequency band", around the frequency band in which a maximum of the estimated PSD arises;
determining (s80) a ratio, hereinafter referred to as "noise floor level", of a mean of the estimated PSD without the excluded frequency band to the value representing an expected noise level of the IMU; and
determining (s90) whether the object is stationary with respect to the Earth-fixed reference frame further based on a finding that the noise floor level does not exceed a threshold.

5. Method according to any one of the preceding claims, wherein
the estimated PSD of the at least one time interval preceding the time interval under consideration is hereinafter referred to as "historical estimated PSD", and,
for low-pass filtering (s40) the estimated PSD, an extent to which the historical estimated PSD is used depends on a measure of a likelihood of the object being stationary, the measure being hereinafter referred to as "stationary state likelihood measure".

6. Method of claim 5, wherein, for low-pass filtering (s40) the estimated PSD, the higher the stationary state likelihood measure, the greater a weight given to the historical estimated PSD.

7. Method according to any one of the preceding claims, wherein the object is one of:
a land vehicle;
an object that can be carried by a land vehicle; and
an object that can be pulled by a land vehicle.

8. Method according to any one of the preceding claims, wherein the acquired inertial data is stored in a ring buffer data structure.

9. Method according to any one of the preceding claims, wherein the window function is a non-rectangular window function.

10. Method of claim 9, wherein the window function is any one of: a full Hann window and a half Hann window.

11. Method according to any one of the preceding claims, wherein the windowed inertial data has a sampling rate *SR*, wherein *SR* is a value selected from a range from 3 to 25 Hz, preferably a value selected from a range from 4 to 15 Hz, more preferably a value selected from a range from 4 to 8 Hz.

12. System (1200), comprising a device or a set of devices, for determining whether an object is stationary with respect to an Earth-fixed reference frame, the system (1200) being configured for:
acquiring measurement data, hereinafter referred to as "inertial data", from an inertial measurement unit, hereinafter abbreviated as "IMU", rigidly mounted with respect to the object;
for each time interval, hereinafter referred to as "time interval under consideration", of a plurality of time intervals resulting from consecutively using a moving time window, except for an initial time interval, performing the following:
generating data, hereinafter referred to as "windowed inertial data", by applying a window function to the inertial data acquired during the time interval under consideration;
estimating a power spectral density, hereinafter abbreviated as "PSD", of the windowed inertial data;
low-pass filtering the estimated PSD, based on an estimated PSD of at least one time interval preceding the time interval under consideration;
determining a ratio, hereinafter referred to as "SNR value", of a maximum of the low-pass-filtered, estimated PSD to a value representing an expected noise level of the IMU; and
determining whether the object is stationary with respect to the Earth-fixed reference frame based on the SNR value.

13. Vehicle, or container, comprising a system (1200) according to claim 12, the vehicle being preferably at least one of: a motor vehicle, a car, an automobile, a van, a truck, a tanker, a bus, a train, a motorcycle, a tractor, an agricultural equipment, an agricultural tractor, a combine harvester, a crop sprayer, a forestry equipment, a construction equipment, a grader, an excavator, an autonomous vehicle, a self-driving vehicle, a driverless vehicle, a robotic vehicle, a highly automated vehicle, and a partially automated vehicle.

14. Computer program, or set of computer programs, comprising computer- and/or machine-readable instructions configured, when executed on a system (1200) according to claim 12, to cause the system (1200) to carry out the operations that the system (1200) is configured to carry out.

15. Computer program product or storage mediums comprise a computer program, or set of computer programs, according to claim 14.
